# FASCICULE DE BREVET EUROPEEN

(11) **EP 1 317 364 B1**
(45) Date de publication et mention de la délivrance du brevet: **02.01.2008**
(21) Numéro de dépôt: 01967415.9
(22) Date de dépôt: 31.08.2001
(51) Int. Cl.: B60T 13/52, B60T 17/00

(54) **SERVOMOTEUR PNEUMATIQUE ET PROCEDE DE FABRICATION DUDIT SERVOMOTEUR**
PNEUMATISCHER BREMSKRAFTVERSTÄRKER UND ZUGEHÖRIGES HERSTELLUNGSVERFAHREN
PNEUMATIC BRAKE BOOSTER AND METHOD FOR MAKING SAME

(30) Priorité: 04.09.2000 FR 0011497
(43) Date de publication de la demande: 11.06.2003
(73) Titulaire: ROBERT BOSCH GMBH, 70442 Stuttgart (DE)
(72) Inventeur: LEBOISNE, Cédric, F-75011 Paris (FR)
(74) Mandataire: Hurwic, Aleksander Wiktor
(86) Numéro de dépôt international: PCT/FR2001/002722
(87) Numéro de publication internationale: WO 2002/020321

(56) Documents cités:
- DE-U- 9 005 629
- US-A- 5 031 507
- US-A- 6 073 535

## Description

La présente invention se rapporte principalement à un servomoteur pneumatique d'assistance au freinage minimisant le bruit dans l'habitacle du véhicule tout en présentant un encombrement limité dans le compartiment moteur, ainsi qu'à un véhicule automobile comportant un tel servomoteur.

Il est habituel d'amplifier la force qu'un conducteur exerce sur une pédale de frein avec un servomoteur pneumatique (booster en terminologie anglo-saxonne) comportant une chambre avant à volume variable séparée d'une chambre arrière à volume variable par une membrane étanche souple et par une jupe rigide entraînant un piston pneumatique prenant appui par l'intermédiaire d'une tige de poussée, sur le piston primaire d'un maître-cylindre tandem d'un circuit hydraulique de freinage. Une première chambre, typiquement, la chambre avant dirigée vers le maître-cylindre tandem est reliée pneumatiquement à une source de vide alors qu'une deuxième chambre, typiquement, la chambre arrière, opposée à la chambre, avant est reliée pneumatiquement, de manière contrôlée par une valve, à une source de fluide propulseur, typiquement de l'air sous pression atmosphérique. Le document US 6 073 535 decrit un servomoteur avec une entrée dans le compartiment moteur.

Au repos, c'est à dire lorsque le conducteur n'actionne pas la pédale de frein, les chambres avant et arrière sont connectées alors que la chambre arrière est isolée par rapport à la pression atmosphérique. Lors du freinage, on isole tout d'abord la chambre avant par rapport à la chambre arrière, puis on admet de l'air dans la chambre arrière.

L'alimentation de la chambre arrière en air sous pression atmosphérique provoque un écoulement engendrant un bruit qui peut-être considéré comme gênant par les occupants du véhicule.

Par ailleurs, le constructeur automobile cherche à réduire l'encombrement du compartiment moteur par les divers organes nécessaires au fonctionnement du véhicule.

C'est par conséquent un but de la présente invention d'offrir un servomoteur pneumatique d'assistance au freinage engendrant peu de bruit et de vibrations dans l'habitacle.

Ce but est atteint selon l'invention par un servomoteur pneumatique d'assistance de freinage comportant une prise d'alimentation en air débouchant dans le compartiment moteur.

C'est également un but de la présente invention d'offrir un tel servomoteur pneumatique d'assistance de freinage ayant une faible emprise dans le compartiment moteur de manière à permettre l'utilisation du volume libéré pour l'implantation d'autres organes et/ou pour réduire le volume du dit compartiment moteur, par exemple pour réaliser un véhicule plus compact.

Ce but est atteint selon la présente invention par un servomoteur pneumatique d'assistance au freinage muni d'une coque définissant sa paroi externe, une zone de cette coque définissant un canal d'alimentation en air de préférence à pression atmosphérique, l'entrée du canal débouchant dans le compartiment moteur. Avantageusement, la zone de la coque externe délimitant le canal, correspond à la zone arrière dirigée vers le tablier assurant une séparation entre le compartiment moteur et l'habitacle. De préférence, la zone arrière correspond à la paroi de la chambre arrière susceptible d'être remplie avec de l'air à la pression désirée. Avantageusement, le canal d'alimentation en air du servomoteur selon la présente invention forme un secteur angulaire qui, de préférence est dirigé vers le bas de manière à limiter l'admission des particules solides et des liquides dans le servomoteur.

Le servomoteur, selon la présente invention, est avantageusement muni d'un capot arrière d'étanchéité et de protection pénétrant dans l'habitacle par une ouverture pratiquée dans un tablier assurant une séparation entre le compartiment moteur et l'habitacle.

Avantageusement, le capot de protection et d'étanchéité comporte une zone pénétrant dans le compartiment moteur en vis à vis de la zone de la paroi arrière du servomoteur formant un canal d'alimentation. Au niveau du canal d'alimentation en air, ladite zone du capot de protection et d'étanchéité forme la paroi opposée de ce canal.

L'invention a principalement pour objet un servomoteur d'assistance pneumatique au freinage de véhicule automobile comportant une première chambre délimitée par une paroi rigide externe et séparée par une membrane étanche d'une deuxième chambre d'autre part délimitée par une paroi rigide externe ladite membrane reposant sur une pièce rigide entraînant un piston pneumatique lors des variations, sur commande, du volume desdites première et deuxième chambres, des moyens de connections de la première chambre à une source de vide et une valve de contrôle d'introduction, sur commande, d'une pression d'air, à partir d'une entrée d'air dans ladite deuxième chambre caractérisé en ce que la paroi rigide externe de l'une desdites première et deuxième chambres défini un canal radial d'alimentation en air d'une desdites chambres le dit canal comportant une entrée susceptible de déboucher dans le compartiment moteur.

L'invention a également pour objet un servomoteur caractérisé en ce que l'emprise du canal radial est située vers l'intérieur de la chambre arrière de manière à minimiser une augmentation A de la longueur e du servomoteur.

L'invention a aussi pour objet un servomoteur caractérisé en ce que l'entrée du canal radial débouche vers le bas en condition d'utilisation.

L'invention a aussi pour objet un servomoteur caractérisé en ce que ladite paroi rigide externe définissant ledit canal comporte une zone de fixation du servomoteur sur un tablier d'un véhicule automobile.

L'invention a aussi pour objet un servomoteur caractérisé en ce qu'il comporte des tirants de renforcement de structure débouchant dans ladite zone de fixation sur le tablier d'un véhicule automobile.

L'invention a aussi pour objet un servomoteur caractérisé en ce qu'il comporte un capot d'étanchéité et de protection d'une partie arrière du servomoteur reçu dans un habitacle du véhicule automobile.

L'invention a aussi pour objet un servomoteur caractérisé en ce que le capot de protection et d'étanchéité définit un canal d'alimentation en air reliant ledit canal radial à une ouverture située à l'arrière du piston pneumatique.

L'invention a également pour objet un véhicule automobile caractérisé en ce qu'il comporte un compartiment moteur séparé par un tablier d'un habitacle et en ce que sur ledit tablier est fixé un servomoteur selon l'une des quelconques revendications précédentes.

L'invention a aussi pour objet un véhicule automobile caractérisé en ce que le servomoteur est solidarisé avec le tablier par des tirants passant à travers ladite paroi rigide externe, par une zone radiale du capot et par le tablier.

L'invention a également pour objet un procédé de fabrication d'un servomoteur d'assistance pneumatique au freinage caractérisé en ce qu'il comporte une étape de déformation d'une paroi externe rigide de manière à formé un canal d'alimentation en air et une étape d'assemblage de ladite de la paroi rigide externe avec d'autres éléments constituant ledit servomoteur.

L'invention sera mieux comprise au moyen de la description et des figures annexées données comme un exemple non limitatif et sur lesquelles :
La figure 1 est une vue arrière de l'exemple préféré de réalisation d'un servomoteur pneumatique d'assistance au freinage;
La figure 2 est une coupe selon II-II du servomoteur de la figure 1.

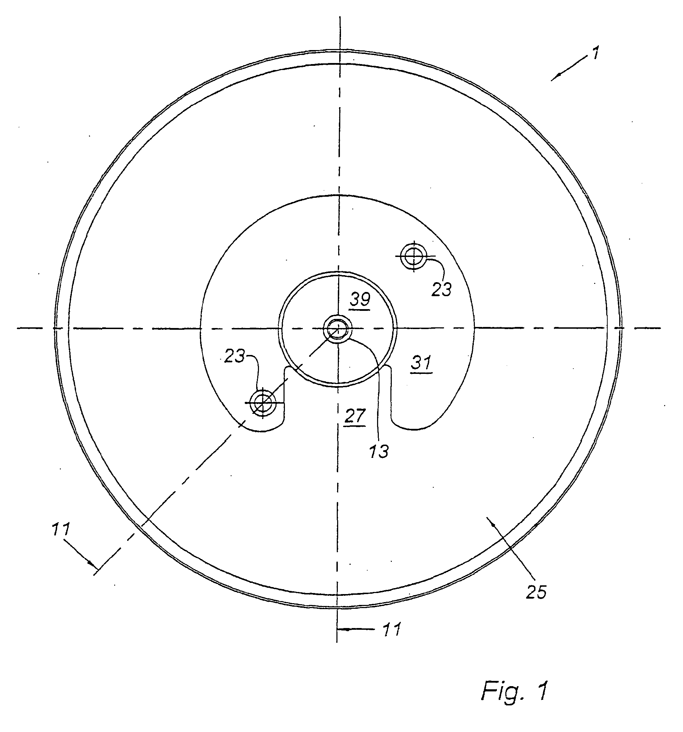

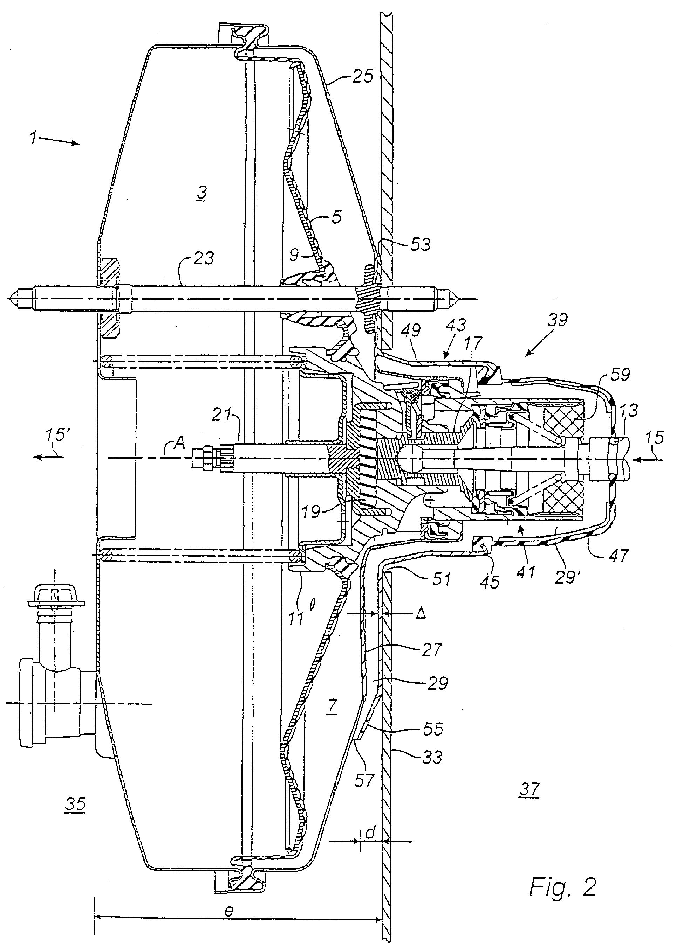

Sur les figures 1 et 2, on a utilisé les mêmes références pour désigner les mêmes éléments.

Sur les figures 1 et 2, on peut voir l'exemple préféré de réalisation d'un servomoteur 1 pneumatique d'assistance au freinage selon la présente invention comportant une chambre avant 3 séparée par une membrane étanche 5 d'une chambre arrière 7. La membrane 5 repos sur jupe rigide 9 entraînant un piston pneumatique 11 lors de la variation du volume des dites chambres 3 et 7. Une tige de commande 13 susceptible d'être entraînée selon la flèche 15 par une pédale de frein (non- représentée) prend appui sur un plongeur distributeur 17, lui-même en appui sur un disque de réaction 19 en matériau incompressible, tel qu'un élastomère, disposé dans une chambre dont au moins une des parois est solidaire d'une tige de poussée 21 prenant appui sur un piston primaire d'un maître-cylindre tandem (non représenté). Le plongeur distributeur 17 commande, de manière connue en soi, une valve munie d'un premier clapet d'obturation, sur commande, d'un canal de communication entre les chambres avant 3 et arrière 7 du servomoteur 1 et un deuxième clapet d'ouverture, sur commande, d'un canal d'alimentation en air de la chambre arrière 7 du dit servomoteur. Les sièges de clapet sont décalés axialement de manière à ce que l'avance de la tige de commande 13 selon la flèche 15. On commence par fermer le clapet assurant l'isolation hermétique des chambres avant 3 et arrière 7 puis on ouvre les clapets d'alimentation en air de la chambre arrière 7 du servomoteur. Ainsi, l'air sous pression atmosphérique s'engouffre de manière contrôlée dans la chambre arrière 7 et la différence de pression exercée sur la jupe 9 entraîne le piston pneumatique 11 assurant l'assistance au freinage désirée.

Dans l'exemple particulièrement avantageux illustré, le servomoteur 1 comporte des moyens de rigidification axiale tel que deux tirants 23 parallèles à l'axe A du servomoteur et, disposés symétriquement par rapport à cet axe. De manière connue, la mise en oeuvre des tirants 23 assurant la rigidification du servomoteur permet de réduire l'épaisseur de l'enveloppe externe du servomoteur et par suite de diminuer sa masse. De plus, la paroi arrière 25 ne participe plus de manière significative à la rigidité du servomoteur ce qui permet, selon la présente invention de la déformer dans une zone 27 de manière à former un canal 29 radial d'alimentation de la chambre 7 en air à pression atmosphérique, c'est à dire sensiblement perpendiculaire à l'axe A et par suite sensiblement parallèle au tablier 33. Ainsi, il est possible d'aménager une zone 31 de la paroi arrière 25 de fixation sur un tablier 33 assurant la séparation entre un compartiment moteur 35 et un habitacle 37. Dans l'exemple préféré illustré la zone 31 inclut le passage des tirants 23 qui sont solidarisés avec le tablier 33 et entourent partiellement, par exemple sur un angle sensiblement égal à 270°, la base d'un capot 39 de protection et d'isolation hermétique d'une partie arrière 41 du servomoteur 1. Les limites entre les zones 27 et 31 sont, par exemple formées par deux segments de droites tangents à la base sensiblement circulaire du capot 39 et parallèles entre eux. Le capot 39 comporte une partie avant 43 rigide comprenant, en partant de l'arrière vers l'avant, une zone 45 d'ancrage d'une partie souple 47 du capot 39 reliée à une partie sensiblement tubulaire 49 qui en s'évasant passe par une ouverture 51 circulaire ou sensiblement circulaire pratiquée dans les tabliers 33; puis, dans une zone 53 la partie rigide 43 est sensiblement parallèle au tablier 33. Avantageusement, la partie 53 est prise en sandwich entre la zone 31 de la paroi 25 et le tablier 33.

Avantageusement, la partie de la zone 53 se trouvant en vis à vis de la zone 27 coopère avec cette dernière pour définir le canal 29. De manière préférée, elle est munie à cet endroit d'un bord rabattu vers la paroi arrière 25 formant une entrée 57 du canal 29. Il est à noter qu'en plaquant la paroi arrière 25, par la zone 31 contre le tablier 33 on diminue l'emprise e du servomoteur 1 dans le compartiment moteur 35. Le canal 29 a par exemple une profondeur d comprise entre 0.1 et 10 mm, de préférence comprise entre 0.2 et 5 mm, par exemple égale à 3 mm. La section d'aspiration du canal 29 est par exemple comprise entre 5 mm² et 500 mm², de préférence comprise entre 50 mm² et 300 mm² de manière préférée comprise entre 100 mm² et 250 mm², elle est par exemple égale à 150 mm², 200 mm² ou 250 mm². De manière particulièrement avantageuse le canal 29 est formé vers l'intérieur d'une des chambres (de la chambre arrière 7 dans l'exemple avantageux illustré). La diminution du volume de la chambre 7, par l'emprise du canal 29, diminuant le volume de la chambre arrière 7, a des conséquences complètement négligeables sur le fonctionnement du piston pneumatique 11, tout en permettant de réduire l'encombrement du servomoteur 1 dans le compartiment moteur. Dans l'exemple avantageux illustré l'augmentation Δ de cet encombrement correspondant à la distance e entre la face avant du servofrein et la face arrière de la zone 31 de fixation sur le tablier 33 par rapport à un servofrein comportant une prise d'air situé dans l'habitacle est égale à l'épaisseur de la zone 53 du capot 39. Cette épaisseurs est par exemple égale à 0.5 mm. En outre, le servomoteur 1 est fixé de manière extrêmement efficace directement sur les tabliers 33 sans nécessiter des pièces intermédiaires supplémentaires.

La partie souple 47 du capot 39, réalisée par exemple en élastomère, permet de suivre les déplacements axiaux de la tige de commande 13.

Le canal 29 de l'alimentation en air se prolonge axialement en 29' entre la partie souple 47 du capot 39 et la partie arrière du piston pneumatique 11, pour permettre l'écoulement de l'air à travers l'ouverture arrière 59 du piston pneumatique 11 avantageusement muni d'un filtre empêchant la pénétration d'impuretés en direction de la valve et des chambres 3 et 7.

La zone 27 est avantageusement obtenue par déformation à froid, par exemple par emboutissage, de la paroi arrière 25, s'il s'agit d'une tôle métallique (comme illustré) typiquement en acier ou en aluminium ou par moulage dans le cas d'une paroi arrière réalisée en matière plastique.

D est bien entendu que la présente invention n'est pas limitée à l'exemple avantageux décrit. Ainsi, les servomoteurs pneumatiques d'assistance au freinage dépourvus de tirants et/ou les servomoteurs dont la chambre avant 3 est susceptible d'être alimentée par l'air sous pression atmosphérique alors que la chambre arrière 7 est reliée à une source de vide ne sortent pas du cadre de la présente invention.

La présente invention s'applique notamment à l'industrie automobile.

La présente invention s'applique principalement aux systèmes de freinage.

## Revendications

1. Servomoteur d'assistance pneumatique au freinage de véhicule automobile comportant une première chambre (3) délimitée par une paroi rigide externe et séparée par une membrane étanche (5) d'une deuxième chambre (7) d'autre part délimitée par une paroi rigide externe (25) ladite membrane (5) reposant sur une pièce rigide (9) entraînant un piston pneumatique (11) lors des variations, sur commande, du volume desdites première et deuxième chambres (3,7), des moyens de connections de la première chambre (3) à une source de vide et une valve de contrôle d'introduction, sur commande, d'une pression d'air, à partir d'une entrée d'air dans ladite deuxième chambre (7) **caractérisé en ce que** la paroi rigide externe (25) de l'une desdites première et deuxième chambres (3,7) défini un canal (29) radial d'alimentation en air d'une desdites chambres (3,7) le dit canal (29) comportant une entrée (57) susceptible de déboucher dans le compartiment moteur (35).

2. Servomoteur selon la revendication 1 **caractérisé en ce que** l'emprise du canal radial (29) est située vers l'intérieur de la chambre arrière (7) de manière à minimiser une augmentation de Δ de la longueur e du servomoteur (1).

3. Servomoteur selon la revendication 1 ou 2 **caractérisé en ce que** l'entrée (57) du canal radial (29) débouche vers le bas en condition d'utilisation.

4. Servomoteur selon les revendications 1, 2 ou 3 **caractérisé en ce que** ladite paroi rigide externe (25) définissant ledit canal (29) comporte une zone (31) de fixation du servomoteur (1) sur un tablier (33) d'un véhicule automobile.

5. Servomoteur selon la revendication 4 **caractérisé en ce qu'**il comporte des tirants (23) de renforcement de structure débouchant dans ladite zone (31) de fixation sur le tablier (33) d'un véhicule automobile.

6. Servomoteur selon l'une quelconque des revendications précédentes **caractérisé en ce qu'**il comporte un capot (39) d'étanchéité et de protection d'une partie arrière (41) du servomoteur (1) reçu dans un habitacle (37) du véhicule automobile.

7. Servomoteur selon la revendication 6 **caractérisé en ce que** le capot (39) de protection et d'étanchéité défini un canal d'alimentation en air (29') reliant ledit canal radial (29) à une ouverture (59) située à l'arrière du piston pneumatique (11).

8. Véhicule automobile **caractérisé en ce qu'**il comporte un compartiment moteur (35) séparé par un tablier (33) d'un habitacle (37) et **en ce que** sur ledit tablier (33) est fixé un servomoteur (1) selon l'une quelconque des revendications précédentes.

9. Véhicule automobile selon la revendication 8 **caractérisé en ce que** le servomoteur (1) est solidarisé avec le tablier (33) par des tirants (23) passant à travers ladite paroi rigide externe (25), par une zone radiale (53) du capot (39) et par le tablier (33).

10. Procédé de fabrication d'un servomoteur d'assistance pneumatique au freinage selon l'une des quelconques revendications 1 à 7 **caractérisé en ce qu'**il comporte une étape de déformation d'une paroi (25) externe rigide (25) de manière à formé un canal (29) d'alimentation en air et une étape d'assemblage de ladite de la paroi rigide externe (25) avec d'autres éléments constituant ledit servomoteur (1).

## Claims

1. Pneumatic servomotor for an assisted braking of a motor vehicle, comprising a first chamber (3), defined by an outer rigid wall and separated, by means of a tight diaphragm (5), from a second chamber (7), which is also defined by an outer rigid wall (25), said diaphragm (5) resting on a rigid piece (9), which drives the pneumatic piston (11) on the controlled variations of the capacities of said first and second chambers (3, 7), connecting means arranged between the first chamber (3) and a vacuum source, and a control valve for the admission into said second chamber (7), on actuation, of an air pressure from an air inlet, **characterised in that** the outer rigid wall (25) of one of said first and second chambers (3, 7) defines a radial air-supply passage (29) for one of said chambers (3, 7), said passage (29) having an inlet (57) capable of opening into the engine compartment (35).

2. Servomotor according to claim 1, **characterised in that** the space occupied by the radial passage (29) is situated toward the inside of the rear chamber (7), so as to minimise an increase Δ of the length e of the servomotor (1).

3. Servomotor according to claim 1 or 2, **characterised in that** the inlet (57) of the radial passage (29) opens downwards in the operating state.

4. Servomotor according to claim 1, 2 or 3, **characterised in that** said outer rigid wall (25), defining said passage (29), comprises an area (31) for the attachment of the servomotor (1) to the dashboard cross-panel (33) of a motor vehicle.

5. Servomotor according to claim 4, **characterised in that** it comprises reinforcing tie bars (23), arriving at said area (31) for the attachment to the dashboard cross-panel (33) of a motor vehicle.

6. Servomotor according to any one of the preceding claims, **characterised in that** it comprises a sealing and protective casing (39) for a rear part (41) of the servomotor (1), said casing being housed within a passenger space (37) of the motor vehicle.

7. Servomotor according to claim 6, **characterised in that** the sealing and protective casing (39) defines an air-supply passage (29'), connecting said radial passage (29) to an opening (59) at the rear part of the pneumatic piston (11).

8. Motor vehicle, **characterised in that** it comprises an engine compartment (35), separated from a passenger space (37) by means of a dashboard cross-panel (33), and **in that** a servomotor (1) according to any one of the preceding claims is attached to said dashboard cross-panel (33).

9. Motor vehicle according to claim 8, **characterised in that** the servomotor (1) is rigidly linked up with the dashboard cross-panel (33) by means of tie bars (23), traversing said outer rigid wall (25), in a radial area (53) of the casing (39) and of the dashboard cross-panel (33).

10. Manufacturing process for a pneumatic servomotor intended for an assisted braking according to any one of claims 1 to 7, **characterised in that** it includes a deformation step, carried out on an outer rigid wall (25) so as to form an air-supply passage (29), and an assembling step to fit together the outer rigid wall (25) and other elements, making up said servomotor (1).

## Patentansprüche

1. Pneumatischer Kraftfahrzeugservomotor zur Bremsunterstützung, mit einer ersten Kammer (3), die durch eine starre Außenwand begrenzt und durch eine dichte Membran (5) von einer zweiten Kammer (7) getrennt ist, welche wiederum durch eine starre Außenwand (25) begrenzt ist, wobei die Membran (5) auf einem starren Teil (9) aufliegt, das bei Änderungen, auf Betätigung, des Volumens der ersten Kammer und der zweiten Kammer (3, 7) einen pneumatischen Kolben (11) mitnimmt, mit Mitteln zur Verbindung der ersten Kammer (3) mit einer Vakuumquelle und mit einem Ventil zur Steuerung des Einleitens, auf Betätigung, eines Luftdrucks ausgehend von einem Lufteinlass in die zweite Kammer (7), **dadurch gekennzeichnet, dass** die starre Außenwand (25) der ersten oder der zweiten Kammer (3, 7) einen radialen Kanal (29) zur Versorgung einer der Kammern (3, 7) mit Luft definiert, wobei der Kanal (29) einen Einlass (57) aufweist, der in den Motorraum (35) münden kann.

2. Servomotor nach Anspruch 1, **dadurch gekennzeichnet, dass** die Erstreckung des radialen Kanals (29) zum Inneren der hinteren Kammer (7) hin verläuft, um eine Erhöhung der Länge e des Servomotors (1) um Δ zu minimieren.

3. Servomotor nach Anspruch 1 oder 2, **dadurch gekennzeichnet, dass** der Einlass (57) des radialen Kanals (29) im Betriebszustand nach unten mündet.

4. Servomotor nach Anspruch 1, 2 oder 3, **dadurch gekennzeichnet, dass** die starre Außenwand (25), die den Kanal (29) definiert, einen Bereich (31) zur Befestigung des Servomotors (1) an einer Spritzwand (33) eines Kraftfahrzeugs aufweist.

5. Servomotor nach Anspruch 4, **dadurch gekennzeichnet, dass** er Strukturverstärkungsrippen (23) aufweist, die in den Bereich (31) zur Befestigung an der Spritzwand (33) eines Kraftfahrzeugs münden.

6. Servomotor nach einem der vorhergehenden Ansprüche, **dadurch gekennzeichnet, dass** er eine Abdeckkappe (39) zur Abdichtung und zum Schutz eines hinteren Teils (41) des Servomotors (1) aufweist, der in einem Fahrgastraum (37) eines Kraftfahrzeugs aufgenommen ist.

7. Servomotor nach Anspruch 6, **dadurch gekennzeichnet, dass** die Abdeckkappe (39) zum Schutz und zur Abdichtung einen Kanal (29') zur Luftversorgung definiert, der den radialen Kanal (29) mit einer Öffnung (59) verbindet, die sich im hinteren Bereich des pneumatischen Kolbens (11) befindet.

8. Kraftfahrzeug, **dadurch gekennzeichnet, dass** es einen Motorraum (35) aufweist, der durch eine Spritzwand (33) von einem Fahrgastraum (37) getrennt ist, und dass ein Servomotor (1) nach einem der vorhergehenden Ansprüche an der Spritzwand (33) befestigt ist.

9. Kraftfahrzeug nach Anspruch 8, **dadurch gekennzeichnet, dass** der Servomotor (1) über Rippen (23), die durch die starre Außenwand (25) und über einen radialen Bereich (53) der Abdeckkappe (39) und die Spritzwand (33) verlaufen, fest mit der Spritzwand (33) verbunden ist.

10. Verfahren zur Herstellung eines pneumatischen Servomotors zur Bremsunterstützung nach einem der Ansprüche 1 bis 7, **dadurch gekennzeichnet, dass** es einen Schritt umfasst, bei dem eine starre Außenwand (25) so verformt wird, dass ein Kanal (29) zur Luftversorgung gebildet wird, und einen Schritt, bei dem die starre Außenwand (25) mit weiteren Elementen, aus denen der Servomotor (1) besteht, zusammengefügt wird.
